# EUROPEAN PATENT SPECIFICATION

(11) **EP 0 362 919 B1**
(45) Date of publication and mention of the grant of the patent: **03.08.1994**
(21) Application number: 89202304.5
(22) Date of filing: 12.09.1989
(51) Int. Cl.: B29D 23/22, B29C 55/26, F16L 9/12

(54) **Extruded radially stretched plastic pipe and procedure for manufacturing such a pipe**
Extrudiertes radial gestrecktes Kunststoffrohr und Verfahren zur Herstellung eines derartigen Rohres
Tuyau plastique extrudé étiré radialement et son procédé de fabrication

(30) Priority: 16.09.1988 NL 8802305
(43) Date of publication of application: 11.04.1990
(73) Proprietor: WAVIN B.V., NL-8011 CW Zwolle (NL)
(72) Inventor: Loman, Henricus Gerardus Maria, NL-7602 JJ Almelo (NL)
(74) Representative: Barendregt, Frank, Drs.

(56) References cited:
- EP-A- 0 099 222
- DE-A- 2 231 703
- DE-A- 3 248 479
- FR-A- 2 248 140
- US-A- 4 315 963

## Description

The invention relates primarily to an extruded, plastic pipe for the conveyance of fluids such as waste and rain water, said pipe being made of solid plastic material, having a wall in which blank spaces extending over a part of the thickness thereof are present, said pipe being radially stretched.

Such pipes are known from e.g. European Patent Specification no. 0 099 222.

Said European Patent Specification discloses a double-layered plastic pipe, comprising a first layer, a second layer, and, between said layers a first set and a second set of oppositely handed helical elements forming a bi-planar mesh, the first helical elements being united with the first layer, the first and second helical elements being united with each other at their cross-over points, and the second helical elements being united with the second layer, said pipe being produced in one coaxial extrusion operation, and being radially stretched.

The object of the invention is to provide an improved, extruded plastic pipe.

This object is attained by an extruded plastic pipe, in which the blank spaces are channels, which extend essentially in the longitudinal direction thereof, provided during initial shaping.

The pipe accordingly the invention has very good properties as regards impact strength, modulus of elasticity, creep and resistance to stress corrosion. In particular, the improvement of the impact strength is considerable.

US-A-4315963 describes a tubular film having ribs and being biaxially stretched. The tubular film is however not used as a self-bearing tube for the conveyance of fluids such as waste and rainwater as the tube according to the present invention, but is applied for the manufacturing of tear resistant bags such as trash bags.

In particular, the pipes according to the invention have a smooth inside wall.

As regards the degree of stretching in the pipe according to the invention it is of course true that the possibilities in this respect are governed by the nature of the plastic concerned, the wall thickness of the pipe and the required properties to be achieved; in general, however, the pipe will have an outside diameter which is at least 25% greater than the outside diameter of the same pipe in the unstretched state.

The stretching of the pipe types described above is not limited to a stretching in the radial direction; the extruded pipe according to the invention is also advantageously stretched in the longitudinal direction.

As regards the stretching parameters, it is also again true in this connection that the degree of stretching is bound up with the dimensions of the original pipe and the final values, to be achieved, of the various mechanical properties; in general the stretching in the longitudinal direction will be such that a unit length of the pipe is at least 25% greater than the length dimension of one and the same pipe section in the unstretched state.

The pipe according to the invention is advantageously manufactured from a polyalkene such as polypropene or polyethene or essentially from polyvinyl chloride.

The invention also relates to a process for manufacturing an extruded plastic pipe for the conveyance of fluids such as waste and rainwater,at least comprising the steps of:
- extruding a pipe of solid plastic material, said pipe having a wall in which blank spaces extending over a part of the thickness thereof are present,
- sizing the pipe,
- radially stretching the pipe, and
- cooling the pipe,
said process being characterized in that
- a pipe of which the wall, during initial shaping, has been provided with blank spaces which are channels, which extend essentially in the longitudinal direction, is brought to a temperature which is above the glass transition temperature and below the melting point of the plastic material prior to radially stretching the pipe.

In a particular embodiment of the process according to the invention, after sizing, the pipe is cooled to ambient temperature and, before the stretching operation, is heated up to the stretching temperature and stretched at said temperature.

In another embodiment of the process according to the invention, after sizing, the pipe is cooled to the stretching temperature and is stretched at said temperature.

In particular, the process according to the invention is carried out in a manner such that, after being moulded, the pipe is tempered before stretching is carried out. Said tempering may be carried out in a plurality of ways, of which the most important consist in keeping the pipe for a suitable period of time at a temperature which is equal to the stretching temperature or heating the pipe to a suitable, usually relatively low, value above the stretching temperature, keeping it at said temperature for a suitable time, after which it is cooled again to the stretching temperature.

As regards the degree of cooling which is necessary to cool the pipe, after it has been moulded, to the stretching temperature, it may be stated that said temperature is at least 50°C below the temperature at which the pipe is moulded.

In a specific case of a PVC pipe, extrusion is carried out, for example, at 196°C, after which the pipe is sized and is cooled to 120°C before the stretching operation is carried out.

In the description given above of the stretching procedure, mention has been made solely of a radial stretching; according to the procedure of the invention, the pipe may also be stretched in the longitudinal direction as mentioned earlier in discussing the product according to the invention.

As regards the stretching percentage, a stretching percentage of at least 25% will in general be adhered to in the process according to the invention both in the radial direction and in the axial direction; the precise value of stretching is, however, dependent on the dimensions of the pipe started from and the type of plastic from which the pipe is manufactured.

The process according to the present invention may be carried out both discontinuously and continuously; in both cases, similar results are obtained.

In the process according to the invention described above, in which stretching is carried out both in the radial and in the axial direction, both stretching operations may be carried out either simultaneously or with separation in time using apparatuses suitable for the purpose. If the operations are carried out with separation in time, the axial stretching may optionally be carried out prior to, or subsequent to, the radial stretching.

The apparatuses to be used are known to the person skilled in the art.

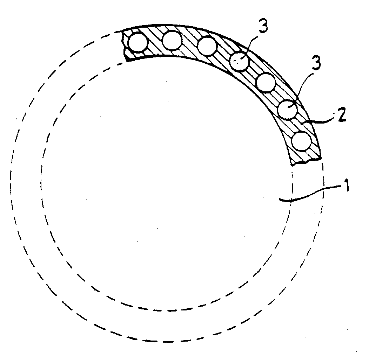

The invention will now be explained with reference to the drawing.

The figure shows diagrammatically the original state of a pipe in which longitudinal channels are provided.

Said figure shows a pipe 1 containing axial channels and a wall 2 and channels 3 extending in the longitudinal direction.

The plastic of the wall 2 is a solid plastic; the presence of the channels 3 provides the circumstance that the weight per unit length of the pipe containing channels is at least 20% lower than the weight of a corresponding pipe without channels.

Solid plastic is understood to mean in this case a material which is not a foam plastic material; i.e. a material that, apart from any naturally present pores, contains no cavities except macroscopic cavities in the form of channels 3 formed by the manufacturing.

As a rule, as stated earlier, stretched plastic pipes obtained in this manner have a higher impact strength and a higher modulus of elasticity, and the pipes exhibit a lower creep and a better resistance to stress corrosion.

In particular, the improved impact strength of the pipes according to the invention is of great importance because, in that case, a lower weight is accompanied by a higher impact strength, which is very attractive for many applications.

As applications, mention may be made of: conveyance of domestic and industrial waste water; conveyance of rain-water and the like in sewage systems.

## Claims

1. Extruded plastic pipe for the conveyance of fluids such as waste and rainwater, said pipe being made of solid plastic material, having a wall (2) in which blank spaces extending over a part of the thickness thereof are present, said pipe being radially stretched, characterized in that the blank spaces are channels (3), which extend essentially in the longitudinal direction thereof, provided during initial shaping.

2. Extruded pipe according to Claim 1, characterized in that the pipe is internally smooth.

3. Extruded pipe according to Claim 1 - 2, characterized in that the pipe has an outside diameter which is at least 25% greater than the outside diameter of the same pipe in the unstretched state.

4. Extruded pipe according to Claim 1 - 3, characterized in that the pipe is also stretched in the longitudinal direction.

5. Extruded pipe according to Claim 4, characterized in that a unit length of the pipe is at least 25% greater than the length dimension of one and the same pipe section in the unstretched state.

6. Extruded pipe according to one or more of the preceding claims, characterized in that the pipe is moulded from a polyalkene material such as PE, PP or essentially from PVC.

7. Process for manufacturing an extruded plastic pipe for the conveyance of fluids such as waste and rainwater, at least comprising the steps of:
- extruding a pipe of solid plastic material, said pipe having a wall in which blank spaces extending over a part of the thickness thereof are present
- sizing the pipe
- radially stretching the pipe, and
- cooling the pipe,
characterized in that
- a pipe of which the wall, during initial shaping, has been provided with blank spaces which are channels (3), which extend essentially in the longitudinal direction, is brought to a temperature which is above the glass transition temperature and below the melting point of the plastic material prior to radially stretching the pipe.

8. Process according to Claim 7, characterized in that, after sizing, the pipe is cooled to ambient temperature and, before the stretching operation, is heated up to the stretching temperature and stretched at said temperature.

9. Process according to Claim 7, characterized in that, after sizing, the pipe is cooled to the stretching temperature and is stretched at said temperature.

10. Process according to Claim 7 - 9, characterized in that, after being moulded, the pipe is tempered before stretching.

11. Process according to Claim 10, characterized in that the tempering is carried out by a treatment selected from:
- keeping the pipe for a suitable period of time at a temperature which is equal to the stretching temperature,
- heating the pipe to a suitable value above the stretching temperature, keeping it there for a suitable time and cooling it again to the stretching temperature.

12. Process according to one or more of Claims 7 - 10, characterized in that the pipe is stretched at a temperature which is at least 50°C below the temperature at which it is moulded.

13. Process according to one or more of Claims 7 - 12, characterized in that the pipe is also stretched in the longitudinal direction.

14. Process according to Claim 13, characterized in that the pipe is simultaneously stretched in the radial and in the longitudinal direction.

15. Process according to one or more of the preceding Claims 7 - 14, characterized in that the process is carried out discontinuously.

16. Process according to one or more of the preceding Claims 7 - 14, characterized in that the process is carried out continuously.

## Patentansprüche

1. Extrudiertes Kunststoffrohr zur Förderung von Fluids wie Abwasser und Regenwasser, wobei das Rohr aus einem massiven Kunststoffmaterial hergestellt ist und eine Wand (2) besitzt, in der sich über einen Teil ihrer Dicke erstreckende Leerräume vorhanden sind, und wobei das Rohr radial gestreckt ist, dadurch gekennzeichnet, daß die Leerräume Kanäle (3) sind, die sich im wesentlichen in dessen Längsrichtung erstrecken und bei der Anfangsformgebung gebildet sind.

2. Extrudiertes Rohr nach Anspruch 1, dadurch gekennzeichnet, daß das Rohr innen glatt ist.

3. Extrudiertes Rohr nach Anspruch 1 - 2, dadurch gekennzeichnet, daß das Rohr einen Außendurchmesser besitzt, der zumindest 25 % größer ist als der Außendurchmesser desselben Rohrs im ungestreckten Zustand.

4. Extrudiertes Rohr nach Anspruch 1 - 3, dadurch gekennzeichnet, daß das Rohr auch in der Längsrichtung gestreckt ist.

5. Extrudiertes Rohr nach Anspruch 4, dadurch gekennzeichnet, daß eine Längeneinheit des Rohrs zumindest 25 % größer ist, als das Längenmaß ein und desselben Rohrabschnitts im ungestreckten Zustand.

6. Extrudiertes Rohr nach einem oder mehreren der vorhergehenden Ansprüche, dadurch gekennzeichnet, daß das Rohr von einem Polyalkenmaterial wie PE, PP oder im wesentlichen von PVC geformt ist.

7. Verfahren zum Herstellen eines extrudierten Kunststoffrohrs für die Förderung von Fluids wie Abwasser und Regenwasser, zumindest die Schritte umfassend, daß
- ein Rohr aus massivem Kunststoffmaterial extrudiert wird, wobei das Rohr eine Wand besitzt, in der sich über einen Teil ihrer Dicke erstreckende Leerräume vorhanden sind,
- das Rohr kalibriert wird,
- das Rohr radial gestreckt wird und
- das Rohr gekühlt wird,
dadurch gekennzeichnet, daß
- ein Rohr, dessen Wand während der Anfangsformgebung mit Leerräumen versehen worden ist, die Kanäle (3) sind, welche sich im wesentlichen in der Längsrichtung erstrecken, vor dem radialen Strecken des Rohres auf eine Temperatur gebracht wird, die über der Glasübergangtemperatur und unter dem Schmelzpunkt des Kunststoffmaterials liegt.

8. Verfahren nach Anspruch 7, dadurch gekennzeichnet, daß das Rohr nach dem Kalibrieren auf Umgebungstemperatur gekühlt und vor dem Streckvorgang auf die Strecktemperatur erwärmt und bei dieser Temperatur gestreckt wird.

9. Verfahren nach Anspruch 7, dadurch gekennzeichnet, daß nach dem Kalibrieren das Rohr auf die Strecktemperatur gekühlt und bei dieser Temperatur gestreckt wird.

10. Verfahren nach Anspruch 7 - 9, dadurch gekennzeichnet, daß das Rohr, nachdem es geformt ist, vor dem Strecken getempert wird.

11. Verfahren nach Anspruch 10, dadurch gekennzeichnet, daß das Tempern durch eine Behandlung ausgeführt wird, bei der nach Wahl
- das Rohr für einen geeigneten Zeitraum auf einer Temperatur gehalten wird, die gleich der Strecktemperatur ist, oder
- das Rohr auf einen geeigneten Wert über der Strecktemperatur erwärmt, es dort für eine geeignete Zeit gehalten und es wieder auf die Strecktemperatur gekühlt wird.

12. Verfahren nach einem oder mehreren der Ansprüche 7 - 10, dadurch gekennzeichnet, daß das Rohr bei einer Temperatur gestreckt wird, die zumindest 50 °C unter der Temperatur liegt, bei der es geformt wird.

13. Verfahren nach einem oder mehreren der Ansprüche 7 - 12, dadurch gekennzeichnet, daß das Rohr auch in der Längsrichtung gestreckt wird.

14. Verfahren nach Anspruch 13, dadurch gekennzeichnet, daß das Rohr gleichzeitig in radialer und in Längsrichtung gestreckt wird.

15. Verfahren nach einem oder mehreren der vorhergehenden Ansprüche 7 - 14, dadurch gekennzeichnet, daß das Verfahren diskontinuierlich durchgeführt wird.

16. Verfahren nach einem oder mehreren der vorhergehenden Ansprüche 7 - 14, dadurch gekennzeichnet, daß das Verfahren kontinuierlich durchgeführt wird.

## Revendications

1. Tuyau en matière plastique extrudé pour transporter des fluides, tels que des eaux usées et pluviales, tuyau qui est fait d'une matière plastique pleine, qui comporte une paroi (2) dans laquelle il existe des espaces vides s'étendant sur une partie de son épaisseur, et qui est étiré radialement, caractérisé en ce que les espaces vides sont des canaux (3) qui s'étendent essentiellement dans sa direction longitudinale et qui sont définis pendant une mise en forme initiale.

2. Tuyau extrudé selon la revendication 1, caractérisé en ce que le tuyau est lisse intérieurement.

3. Tuyau extrudé selon la revendication 1 ou 2, caractérisé en ce que le tuyau a un diamètre extérieur d'au moins 25 % supérieur au diamètre extérieur du même tuyau à l'état non étiré.

4. Tuyau extrudé selon les revendications 1 à 3, caractérisé en ce que le tuyau est également étiré dans la direction longitudinale.

5. Tuyau extrudé selon la revendication 4, caractérisé en ce qu'une unité de longueur du tuyau est d'au moins 25 % supérieure à la dimension en longueur de la même section de tuyau à l'état non étiré.

6. Tuyau extrudé selon une ou plusieurs des revendications précédentes, caractérisé en ce que le tuyau est moulé à partir d'un matériau polyalcène, tel que PE, PP, ou essentiellement à partir de PVC.

7. Procédé pour fabriquer un tuyau en matière plastique extrudé pour transporter des fluides, tels que des eaux usées et pluviales, comportant au moins les étapes qui consistent à :
- extruder un tuyau en matière plastique pleine, ledit tuyau possédant une paroi dans laquelle il existe des espaces vides qui s'étendent sur une partie de son épaisseur,
- calibrer le tuyau,
- étirer le tuyau radialement, et
- refroidir le tuyau,
caractérisé en ce
- qu'un tuyau dont la paroi a été, au cours d'une mise en forme initiale, pourvue d'espaces vides qui sont des canaux (3) s'étendant essentiellement dans la direction longitudinale, est porté à une température supérieure à la température de transition vitreuse et inférieure au point de fusion de la matière plastique avant d'être étiré radialement.

8. Procédé selon la revendication 7, caractérisé en ce qu'après calibrage, le tuyau est refroidi à température ambiante et, avant l'opération d'étirage, chauffé à la température d'étirage pour être étiré à ladite température.

9. Procédé selon la revendication 7, caractérisé en ce qu'après calibrage, le tuyau est refroidi à la température d'étirage et étiré à ladite température.

10. Procédé selon les revendications 7 à 9, caractérisé en ce qu'après avoir été moulé, le tuyau est soumis à un traitement thermique avant étirage.

11. Procédé selon la revendication 10, caractérisé en ce que le traitement thermique est réalisé par un traitement choisi entre :
- le maintien du tuyau pendant une période de temps appropriée à une température égale à la température d'étirage, et
- le chauffage du tuyau jusqu'à une température appropriée supérieure à la température d'étirage, en l'y maintenant pendant une durée appropriée, pour le refroidir à nouveau à la température d'étirage.

12. Procédé selon une ou plusieurs des revendications 7 à 10, caractérisé en ce que le tuyau est étiré à une température qui se situe au moins 50° C au-dessous de la température à laquelle il est moulé.

13. Procédé selon une ou plusieurs des revendications 7 à 12, caractérisé en ce que le tuyau est également étiré dans la direction longitudinale.

14. Procédé selon la revendication 13, caractérisé en ce que le tuyau est étiré simultanément dans la direction radiale et dans la direction longitudinale.

15. Procédé selon une ou plusieurs des revendications 7 à 14 précédentes, caractérisé en ce que le procédé est réalisé d'une manière discontinue.

16. Procédé selon une ou plusieurs des revendications 7 à 14 précédentes, caractérisé en ce que le procédé est réalisé d'une manière continue.
